(19) Europäisches Patentamt
European Patent Office
Office européen des brevets

(11) Veröffentlichungsnummer: **0 006 172**
**B1**

(12) **EUROPÄISCHE PATENTSCHRIFT**

(21) Anmeldenummer: **79101754.4**

(22) Anmeldetag: **05.06.79**

(51) Int. Cl.³: **C 08 L 83/04,** C 08 K 5/39, C 08 K 5/40, C 08 K 5/44, C 08 K 5/47

(54) **Wärmehärtbare Organopolysiloxanmassen.**

(30) Priorität: **05.06.78 DE 2824630**

(43) Veröffentlichungstag der Anmeldung: **09.01.80 Patentblatt 80/1**

(45) Bekanntmachung des Hinweises auf die Patenterteilung: **18.03.81 Patentblatt 81/11**

(84) Benannte Vertragsstaaten: **BE CH DE FR GB IT NL**

(56) Entgegenhaltungen:
**US - A - 3 188 299**
**US - A - 3 192 181**
**US - A - 3 445 420**
**US - A - 3 882 083**

(73) Patentinhaber: **WACKER-CHEMIE GMBH**
**Prinzregentenstrasse 22**
**D-8000 München 22 (DE)**

(72) Erfinder: **Deubzer, Bernward, Dr.**
**Virchowstrasse 14**
**D-8263 Burghausen (DE)**

(72) Erfinder: **Brunner, Erich**
**Gschwandt 70**
**A-4810 Gmunden (DE)**

**EP 0 006 172 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Wärmehärtbare Organopolysiloxanmassen

Organopolysiloxanmassen, welche durch Anlagerung von Sigebundenem Wasserstoff an aliphatische Mehrfachbindung härtbar sind, wobei diese Anlagerung durch Katalysator, insbesondere Platinkatalysator, gefördert wird, und diese Massen einen eine Verzögerung oder Verhinderung der Härtung bei Raumtemperatur bewirkenden Zusatz enthalten, so daß sie wämrehärtbar sind, sind bereits bekannt. Als eine Verzögerung oder Verhinderung der Härtung bei Raumtemperatur bewirkende Zusätze in derartigen Massen wurden beispielsweise bereits empfohlen: Benzotriazol (US—PS 31 92 181, ausgegeben: 29. Juni 1965, R. F. Moore/Dow Corning Corporation, wobei dieser Patentschrift BE—PS 633 692 entspricht), 1,1-Äthinylcyclohexanol (US—PS 34 45 420, ausgegeben: 20. Mai 1969, G. J. Kookoostsedes et al./Dow Corning Corporation, wobei dieser Patentschrift FR—PS 15 28 464 entspricht), Triallylcyanurat (US—PS 38 82 083, ausgegeben: 6. Mai 1975, A. Berger et al./General Electric Company), Dimethylformamid, Pyridin und Alkylthioharnstoffe (US—PS 31 88 299, ausgegeben: 8. Juni 1965, A. J. Chalk/General Electric Company, wobei dieser Patentschrift FR—PS 13 89 134 entspricht).

Gegenüber Organopolysiloxanmassen, welche durch Anlagerung von Si-gebundenem Wasserstoff an aliphatische Mehrfachbindung härtbar sind, wobei diese Anlagerung durch Katalysator, insbesondere Platinkatalysator, gefördert wird, und diese Massen einen vorbekannten, eine Verzögerung oder Verhinderung der Härtung bei Raumtemperatur bewirkenden Zusatz enthalten, so daß sie wärmehärtbar sind, haben die erfindungsgemäßen Organopolysiloxanmassen insbesondere den Vorteil, daß sie nicht nur bei Raumtemperatur, sondern auch bei Temperaturen im Bereich von 40 bis 80°C nicht oder nur sehr langsam härten, so daß sie durch die Viskositätserniedrigung, die durch Erhöhung der Temperatur bewirkt wird, leichter verarbeitbar sind und bei Temperaturen über 100°C, insbesondere über 150°C, rasch härten.

Gegenstand der Erfindung sind wärmehärtbare Organopolysiloxanmassen, welche durch Anlagerung von Si-gebundenem Wasserstoff an aliphatische Mehrfachbindung härtbar sind, wobei diese Anlagerung durch Katalysator, insbesondere Platinkatalysator, gefördert wird, und diese Massen einen eine Verzögerung oder Verhinderung der Härtung zumindest bei Raumtemperatur bewirkenden Zusatz enthalten, dadurch gekennzeichnet, daß mindestens ein Teil von eine Verzögerung oder Verhinderung der Härtung bewirkendem Zusatz aus $1.10^{-4}$ bis 0.5 gewichts-%, bezogen auf das gesamtgewicht der in den Massen vorliegenden Organopolysiloxane, mindestens einer organischen Verbindung mit mindestens einer Gruppierung.

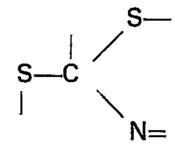

besteht.

Der Si-gebundene Wasserstoff kann auch in den erfindungsgemaßen Massen in den gleichen Verbindungen mit Si-gebundenem Wasserstoff vorliegen wie in den bisher bekannten Organopolysiloxanmassen, welche durch Anlagerung von Si-gebundenem Wasserstoff an aliphatische Mehrfachbindung härtbar sind. Es handelt sich bei diesen Verbindungen meist um solche aus Einheiten der allgemeinen Formel

$$R_mSiO_{\frac{4-m}{2}},$$

worin R Wasserstoff oder gleiche oder verschiedene, einwertige, gegebenenfalls substituierte Kohlenwasserstoffreste bedeutet, wobei mindestens 2, vorzugsweise mindestens 3, Si-gebundene Wasserstoffatome je Molekül dieser Verbindungen vorhanden sind, und m 0, 1, 2 oder 3, vorzugsweise mindestens 1, ist, mit der weiteren Maßgabe, daß in diesen Einheiten durchschnittlich mindestens soviel organische Reste wie Si-gebundene Wasserstoffatome vorliegen.

Si-gebundener Wasserstoff liegt in den erfindungsgemäßen Massen vorzugsweise in Mengen von 0,1 bis 15 Si-gebundenen Wasserstoffatomen je aliphatischer Mehrfachbindung vor.

Aliphatische Mehrfachbindung kann ebenfalls auch in den erfindungsgemäßen Massen in den gleichen Verbindungen mit aliphatischer Mehrfachbindung vorliegen wie in den bisher bekannten Organopolysiloxanmassen, welche durch Anlagerung von Sigebundenem Wasserstoff an aliphatische Mehrfachbindung härtbar sind. Es handelt sich bei diesen Organopolysiloxanen meist um solche aus Einheiten der allgemeinen Formel

$$R^1_{m'}SiO_{\frac{4-m'}{2}},$$

worin $R^1$ gleiche oder verschiedene, einwertige, gegebenenfalls substituierte Kohlenwasserstoffreste bedeutet, wobei in jedem Molekül mindestens 2 der Reste $R^1$, vorzugsweise jedoch höchstens 50% der Anzahl der Reste $R^1$, aliphatische Mehrfachbindungen aufweisen,

und m' ebenfalls 0, 1, 2 oder 3, durchschnittlich jedoch 0,9 bis 2,1, ist.

Aliphatische Mehrfachbindung und Si-gebundener Wasserstoff können in verschiedenen Arten oder in ein und derselben Art von Organosiliciumverbindung vorliegen.

Vorzugsweise enthalten die gegebenenfalls substituierten Kohlenwasserstoffreste R und $R^1$ jeweils 1 bis 18 Kohlenstoffatome. Beispiele für solche, von aliphatischen Mehrfachbindungen freie Kohlenwasserstoffreste R und $R^1$ sind Alkylreste, wie der Methyl-, Äthyl-, n-Propyl- und Isopropylrest sowie Octadecylreste; Cycloalkylreste, wie der Cyclohexyl- und Cycloheptylrest; Arylreste, wie der Phenylrest; Alkarylreste, wie Tolylreste; und Aralkylreste, wie der Benzyl- und der beta-Phenyläthylrest. Als Beispiele für substituierte, von aliphatischen Mehrfachbindungen freie Kohlenwasserstoffreste R und $R^1$ seien halogenierte Kohlenwasserstoffreste, wie der 3,3,3-Trifluorpropylrest und o-, p- und m-Chlorphenylreste, sowie Cyanalkylreste, wie der beta-Cyanäthylrest, genannt. Wegen der leichteren Zugänglichkeit sind vorzugsweise mindestens 50% der Anzahl der nicht aus Si-gebundenem Wasserstoff bestehenden Reste R und mindestens 50% der Anzahl der von aliphatischen Mehrfachbindungen freien Reste $R^1$ Methylreste.

Beispiele für Kohlenwasserstoffreste R und $R^1$ mit aliphatischen Mehrfachbindungen sind der Äthinyl-, Vinyl, Allyl-, Methallyl- und Butadienylrest. Der Vinylrest ist bevorzugt.

Als die Anlagerung von Si-gebundenem Wasserstoff an aliphatische Mehrfachbindung fördernde Katalysatoren können die erfindungsgemäßen Massen ebenfalls die gleichen Katalysatoren enthalten wie sie auch in den bisher bekannten Organopolysiloxanmassen, welche durch Anlagerung von Si-gebundenem Wasserstoff an aliphatische Mehrfachbindung härtbar sind, vorliegen konnten. Beispiele für solche Katalysatoren sind metallisches und feinverteiltes Platin, Ruthenium, Rhodium, Palladium und Iridium, wobei sich diese Metalle jeweils auf Trägern, wie Siliciumdioxyd, Aluminiumoxyd oder Aktivkohle, befinden können, und Verbindungen oder Komplexe aller dieser Elemente, wie Platinhalogenide, z.B. $PtCl_4$, $PtCl_6 \cdot 6H_2O$, komplexgebundenes Wasser enthaltendes $Na_2PtCl_4$, Platin-Olefin-Komplexe, Platin-Alkohol- oder Platin-Alkoholat-Komplexe, Platin-Äther-Komplexe, Platin-Aldehyd-Komplexe, Platin-Vinylsiloxan-Komplexe, insbesondere Platin-Divinyltetramethyldisiloxankomplexe, mit oder ohne Gehalt an nachweisbarem Halogen, Bis-(gamma-picolin)-platindichlorid, Trimethylenpyridin-platindichlorid; ferner Eisen-, Nickel- und Kobaltcarbonyle, sowie Eisen-, Nickel- und Kobaltkomplexe.

Bevorzugt sind Platin und Verbindungen oder Komplexe dieses Elements.

Werden als die Anlagerung von Si-gebundenem Wasserstoff an aliphatische Mehrfachbindung fördernde Katalysatoren im Rahmen der Erfindung die oben genannten Edelmetalle, deren Verbindungen oder deren Komplexe eingesetzt, so werden diese Katalysatoren vorzugsweise in Mengen von 0,5 bis 500 Gewichts-ppm (Gewichtsteilen je Million Gewichtsteilen), insbesondere 2 bis 400 Gewichts-ppm, jeweils berechnet als elementares Edelmetall und bezogen auf das Gesamtgewicht der in den Massen vorliegenden Organopolysiloxane, eingesetzt.

Beispiele für organische Verbindungen mit mindestens einer Gruppierung

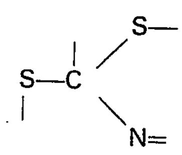

sind Dithiocarbaminsäuren, also Verbindungen der allgemeinen Formel

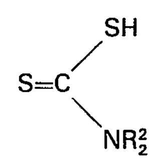

worin $R^2$ die gleiche Bedeutung wie R hat oder einen mindestens ein Heteroatom enthaltenden Kohlenwasserstoffrest bedeutet, wobei die Reste $R^2$, wenn nicht mindestens ein $R^2$ Wasserstoff bedeutet, miteinander zu einem Ring verbunden sein können, die Salze dieser Säuren, Dithiocarbamylsulfenamide, also Verbindungen der allgemeinen Formel

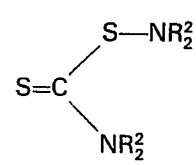

worin $R^2$ die oben dafür angegebene Bedeutung hat, Thiurammonosulfide, also Verbindungen der allgemeinen Formel

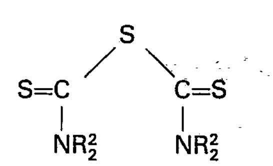

worin $R^2$ die oben dafür angegebene Bedeutung hat, Thiuramdisulfide, also Verbindungen der allgemeinen Formel

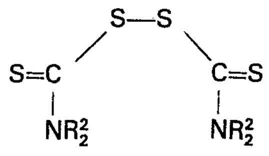

worin $R^2$ die oben dafür angegebene Bedeutung hat, 2-Mercaptobenzothiazol, also die Verbindung der Formel

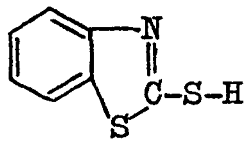 ,

und die Derivate des 2-Mercaptobenzothiazols, bei denen mindestens das Wasserstoffatom der Mercaptogruppe substituiert ist.

Die $R^2$ können jeweils gleich oder verschieden sein.

Das bekannteste Beispiele für eine Dithiocarbaminsäure ist N,N-Dimethyldithiocarbaminsäure.

Einzelne Beispiele für Salze von Dithiocarbaminsäuren sind Piperidin-N-pentamethylendithiocarbamat, Zink-N,N-dibenzyldithiocarbamat, Wismuth-N,N-dimethyldithiocarbamat, Tellur-N,N-diäthyldithiocarbamat, Zink-N,N-di-n-butyldithiocarbamat, Zink-N,N-dimethyldithiocarbamat und Bleidi-N,N-methyldithiocarbamat.

Ein Beispiel für ein Dithiocarbamylsulfenamid ist N,N-Tetramethyldithiocarbamyisulfenamid.

Einzelne Beispiele für Thiurammonosulfide sind Tetramethylthiurammonosulfid, Tetra-n-octadecylthiurammonosulfid und Di-N-pentamethylenthiurammonosulfid.

Einzelne Beispiele für Thiuramdisulfide sind Tetramethylthiuramdisulfid, Tetra-n-butylthiuramdisulfid. Ebenfalls verwendbar ist Di-N-pentamethylenthiuramtetrasulfid.

Einzelne Beispiele für Derivate des 2-Mercaptobenzothiazols, bei denen das Wasserstoffatom der Mercaptogruppe substituiert ist, sind Zinkbenzothiazylsulfid, Dibenzothiazyldisulfid, Benzothiazyl-2-N,N-diäthylsulfenamid, Benzothiazyl-2-N-cyclohexylsulfenamid und Benzothiazyl-2-N,N-diisopropylsulfenamid.

Organische Verbindung mit mindestens einer Gruppierung

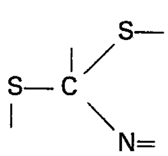

wird in Mengen von $1 \times 10^{-4}$ bis 0,5 Gewichtsprozent, insbesondere 0,01 bis 0,1 Gewichtsprozent, jeweils bezogen auf das Gesamtgewicht der in den Massen vorliegenden Organopolysiloxane, eingesetzt. Je größer die Menge an organischer Verbindung mit mindestens einer Gruppierung

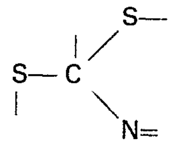

ist, um so langsamer härten die erfindungsgemäßen Massen bei Temperaturen unter 80°C bzw. um so länger ist gewährleistet, daß die erfindungsgemäßen Massen bei Temperaturen unter 80°C nicht härten, und um so höher ist die Temperatur, bei der die Massen rasch härten.

Zusätzlich zu Organosiliciumverbindung(en) mit Si-gebundenem Wasserstoff und aliphatischer Mehrfachbindung, die Anlagerung von Si-gebundenem Wasserstoff an aliphatische Mehrfachbindung förderndem Katalysator und Verbindung mit mindestens einer Gruppierung.

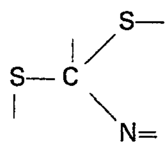

können auch die erfindungsgemäßen Massen Stoffe, die auch in den bisher bekannten Organopolysiloxanmassen, welche durch Anlagerung von Si-gebundenem Wasserstoff an aliphatische Mehrfachbindung härtbar sind, vorliegen konnten, enthalten. Beispiele für solche zusätzlichen Stoffe sind Füllstoffe mit einer Oberfläche von mindestens 50 $m^2/g$, wie pyrogen erzeugtes Siliciumdioxyd, Füllstoffe mit einer Oberfläche von weniger als 50 $m^2/g$, wie Cristobalitmehl, elektrisch leitfähig machende Stoffe, Pigmente, lösliche Farbstoffe, Weichmacher, rein-organische Harze, Mittel zur Verbesserung der Haftung der aus den Massen erzeugten elastischen oder nicht elastischen Produkte auf den Unterlagen, auf denen diese Produkte erzeugt wurden, und andere die Vernetzung verzögernde Mittel als die erfindungsgemäß verwendeten Schwefelverbindungen.

Die erfindungsgemäßen wärmehärtbaren Organopolysiloxanmassen können überall eingesetzt werden, wo der Einsatz von wärmehärtbaren Organopolysiloxanmassen erwünscht ist. Die erfindungsgemäßen Massen eignen sich somit z.B. als Verguß- oder Einbettungsmassen, z.B. für elektronische Bauelemente, wobei insbesondere bei der maschinellen Serienfabrikation ebenso wie bei der Verwendung der Massen zum maschinellen Tauchlackieren die erfindungsgemäß erzielte lange Topfzeit auch bei höheren Temperaturen von großem Vorteil ist, als Abdichtungsmassen, als Klebstoffe, als Isoliermittel, für die Herstellung von Formkörpern, einschließlich Kabelendverschlüssen, als Mittel zum Herstellen von klebrige Stoffe abweisenden Überzügen, z.B. auf Papier, als Beschichtungsmassen für Gewebe

verschiedenster Art sowie für die Herstellung von elektrischen Heizelementen.

Die im folgenden angegebenen Teile und Prozentsätze beziehen sich jeweils auf das Gewicht, soweit nichts anderes angegeben ist.

Die im folgenden Beispiel und dem Vergleichsversuch verwendete Mischung aus Platin-Vinylsiloxan-Komplex und Verdünnungsmittel wurde hergestellt wie folgt:

Zu einer Mischung aus 10 Teilen $H_2PtCl_6 \cdot 6H_2O$, 20 Teilen 1,3-Divinyl-1,1,3,3-tetramethyldisiloxan und 50 Teilen Äthanol wurden 20 Teile Natriumbicarbonat gegeben. Das Gemisch wurde 30 Minuten unter Rühren zum Sieden unter Rückfluß erhitzt, dann 15 Stunden stehengelassen und filtriert.

Aus dem Filtrat wurden bei etwa 12 mm Hg (abs.) die flüchtigen Bestandteile abdestilliert. Als Rückstand wurden 17 Teile einer Flüssigkeit erhalten die in Benzol gelöst wurde. Die Lösung wurde filtriert und aus dem Filtrat das Benzol abdestilliert. Der Rückstand wurde mit einem Organopolysiloxan aus 14 Molprozent Methylvinylsiloxan-, 14 Molprozent Methylhydrogensiloxan-, 43 Molprozent Phenylsiloxan- und 29 Molprozent Trimethylsiloxaneinheiten mit einer Viskosität von 2000 $mm^2 \cdot s^{-1}$ bei 25°C als Verdünnungsmittel in solcher Menge vermischt, daß die Mischung 1% Platin, berechnet als Element, enthält.

Beispiel

Ein Organopolysiloxan aus 14 Molprozent Methylvinylsiloxan-, 14 Molprozent Methylhydrogensiloxan-, 43 Molprozent Phenylsiloxan- und 29 Molprozent Trimethylsiloxaneinheiten mit einer Viskosität von 2000 $mm^2 \cdot s^{-1}$ bei 25°C wird mit 20 mg Platin, berechnet als Element, in Form der 1 Gewichtsprozent Platin enthaltenden Mischung aus Platin-Vinylsiloxan-Komplex und Verdünnungsmittel je Kilogramm des Si-gebundenen Wasserstoff enthaltenden Organopolysiloxans vermischt. Das so erhaltene Gemisch wird mit je 0,01%

2-Mercaptobenzothiazol bzw.
N,N-Dimethyldithiocarbaminsäure bzw.
Zink-N,N-dimethyldithiocarbamat bzw.
Zinkbenzothiazylsulfid bzw.
Dibenzothiazyldisulfid bzw.
Benzothiazyl-2-N,N-diäthylsulfenamid bzw.
Benzothiazyl-2-N-cyclohexylsulfenamid bzw.
Tetramethylthiurammonosulfid bzw.
Tetramethylthiuramdisulfid,

wobei sich die vorstehend genannten Prozentsätze jeweils auf das Gesamtgewicht der Mischung aus Si-gebundenen Wasserstoff enthaltendem Organopolysiloxan und der Mischung aus Platin-Vinylsiloxan-Komplex und Verdünnungsmittel beziehen, vermischt.

Die so erhaltenen Gemische werden 150 Stunden auf 80°C erwärmt. Die danach bei 25°C bestimmten Viskositäten der Gemische liegen alle unter 4000 $mm^2 \cdot s^{-1}$.

Dann werden die Gemische 4 Stunden auf 175°C erwärmt. Dabei werden Blöcke mit einer Shore-D-Härte von 60 bis 70 erhalten. Das beweist eine einwandfreie Härtung der erfindungsgemäßen Massen innerhalb verhältnismäßig kurzer Zeit bei 175°C.

Vergleichsversuch

Das Organopolysiloxan aus 14 Molprozent Methylvinylsiloxan-, 14 Molprozent Methylhydrogensiloxan-, 43 Molprozent Phenylsiloxan- und 29 Molprozent Trimethylsiloxaneinheiten mit einer Viskosität von 2000 $mm^2 \cdot s^{-1}$ bei 25°C wird mit 20 mg Platin, berechnet als Element, in Form der 1 Gewichtprozent Platin enthaltenden Mischung aus Platin-Vinylsiloxan-Komplex und Verdünnungsmittel je Kilogramm des Si-gebundenen Wasserstoff enthaltenden Organopolysiloxans vermischt. Das so erhaltene Gemisch wird mit je 0,1%

Benzotriazol bzw.

1,1-Äthinylcyclohexanol bzw.

Triallylcyanurat bzw.

p,p'-Dioctyldiphenylamin bzw.

Dimethylformamid bzw.

Pyridin bzw.

N,N-Dimethyl-N'-pentamethylenthioharnstoff,

wobei sich die vorstehend genannten Prozentsätze jeweils auf das Gesamtgewicht der Mischung aus Si-gebundenen Wasserstoff enthaltendem Organopolysiloxan und der Mischung aus Platin-Vinylsiloxan-Komplex und Verdünnungsmittel beziehen, vermischt.

Die so erhaltenen Gemische werden 100 Stunden auf 80°C erwärmt. Keines dieser Gemische ist danach noch fließfähig.

**Patentansprüche**

1. Wärmehärtbare Organopolysiloxanmassen, welche durch Anlagerung von Si-gebundenem Wasserstoff an aliphatische Mehrfachbindung härtbar sind, wobei diese Anlagerung durch Katalysator, insbesondere Platinkatalysator, gefördert wird, und diese Massen einen eine Verzögerung oder Verhinderung der Härtung zumindest bei Raumtemperatur bewirkenden Zusatz enthalten, dadurch gekennzeichnet, daß mindestens ein Teil von eine Verzögerung oder Verhinderung der Härtung bewirkendem Zusatz aus $1.10^{-4}$ bis 0.5 Gewichtsprozent, bezogen auf das Gesamtgewicht der in den Massen vorliegenden Organopolysiloxane, mindestens einer organischen Verbindung mit mindestens einer Gruppierung

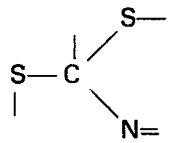

besteht.

2. Massen nach Anspruch 1, dadurch gekennzeichnet, daß die organische Verbindung mit mindestens einer Gruppierung

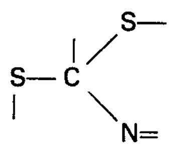

eine Dithiocarbaminsäure, ein Salz dieser Säure, ein Thiurammonosulfid, ein Thiuramdisulfid, 2-Mercaptobenzothiazol oder ein Derivat des Mercaptobenzothiazols, bei dem das Wasserstoffatom der Mercaptogruppe substituiert ist, ist.

## Claims

1. Heat-curable organopolysiloxane compositions which may be cured by the addition of Si-bonded hydrogen to an aliphatic multiple bond, wherein this addition is promoted by a catalyst, especially a platinum catalyst, and these compositions contain an additive retarding or preventing curing, at least at room temperature, characterised in that at least a part of the additive retarding or preventing curing consists of from $1.10^{-4}$ to 0.5% by weight, based on the total weight of the organopolysiloxanes present in the composition, of at least one organic compound having at least one group

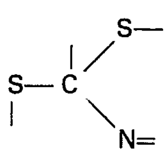

2. Compositions according to claim 1, characterised in that the organic compound having at least one group

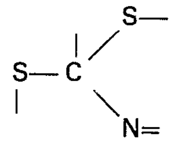

is a dithiocarbamic acid, a salt of this acid, a thiuram monosulphide, a thiuram disulphide, 2-mercaptobenzothiazole or a derivative of the mercaptobenzothiazole, in which the hydrogen atom of the mercapto group is substituted.

## Revendications

1. Matières thermodurcissables à base de polyorganosiloxanes, qui peuvent être durcies par fixation d'hydrogène lié à Si sur une liaison multiple aliphatique, cette fixation étant accélérée par un catalyseur, plus particulièrement un catalyseur au platine, et qui contiennent un additif retardant ou empêchant le durcissement, au moins à la température ambiante, matières caractérisées en ce qu'au moins une partie de l'additif exerçant un effet de ralentissement ou d'inhibition sur le durcissement est constituée de $1.10^{-4}$ à 0,5% en poids, par rapport au poids total des polyorganosiloxanes se trouvant dans les matières, d'au moins un composé organique renfermant au moins un groupement

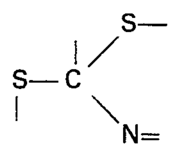

2. Matières selon la revendication 1, caractérisées en ce que le composé organique contenant au moins un groupement

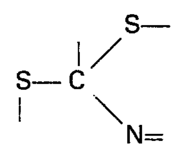

est un acide dithiocarbamique, un sel de cet acide, un monosulfure de thiurame, un disulfure de thiurame, le mercapto-2 benzothiazole ou un dérivé du mercapto-benzothiazole dans lequel l'atome d'hydrogène du groupe mercapto est remplacé.